# EUROPEAN PATENT APPLICATION

(11) **EP 4 772 767 A1**
(43) Date of publication of application: **08.07.2026**
(21) Application number: 25461501.6
(22) Date of filing: 02.01.2025
(51) Int. Cl.: F16H 49/00

(54) **STRAIN WAVE DRIVE**

(71) Applicant: Goodrich Actuation Systems Limited, Wolverhampton, West Midlands WV10 7EH (GB)
(72) Inventor: TUREK, ukasz, 51-317 Wroclaw (PL); DARBY, Jonathan Alan, Wroc aw, 51-317 (GB); CHMIELEWSKI, Pawe Aleksander, 51-317 Wroclaw (PL)
(74) Representative: Casalonga

(57) **Abstract**

A strain wave drive assembly comprising: an assembly housing (100) containing: a wave generator (110) arranged to rotate about an axis and having an elliptical cross-section; a flex spline (30) mounted around the wave generator; and an output spline (55a, 55b) arranged around the flex spline, the output spline driven by the wave generator via the flex spline, wherein the wave generator, the flex spline and the output spline are assembled to float relative to the assembly housing.

## Description

### TECHNICAL FIELD

The present disclosure relates to a strain wave drive, for example a strain wave drive for rotary actuation of flight control surfaces of an aircraft.

### BACKGROUND

Rotary actuation of devices or surfaces e.g. flight control surfaces in an aircraft, requires high torque drive and so typically requires gearing between the electric motor, which is typically high speed, low torque, and the output shaft of the actuator that drives the surface. Conventional involute gears, comprising a number of intermeshing toothed wheels to create the required gear ratio, are relatively large and heavy and the higher the required ratio, the more gears and, thus, the greater the size and weight of the overall actuator system.

In aircraft in particular, and also in other applications, there is a need to minimise the size and weight of components and there is a desire to provide a gear or drive that can provide the required torque ratio using a smaller, lighter, more compact arrangement.

A known type of gear mechanism that is particularly compact is the strain wave drive or gear. Strain wave gearing, also known as a harmonic drive, is used in many drive trains as it is compact and lightweight and can be used to provide a high gear ratio between an input or drive shaft and an output shaft. These properties make strain wave gearing suited to use in aircraft and other vehicles where space is limited and weight of components should be minimised, whilst maintaining reliability and performance.

A strain wave gear system includes a wave generator which is in the form of an elliptical shaft and a compliant bearing in which the elliptical shaft rotates. A flexible toothed ring (a flex spline) is mounted about the wave generator. A fixed outer ring, or circular spline is provided around the flex spline and has inner teeth that engage with the outer teeth of the flex spline but, due to the elliptical shape of the wave generator, the flex spline only engages with the teeth of the outer ring at the major diameter of the wave generator.

In operation, a drive shaft, connected to the wave generator, is rotated e.g. by a motor, which causes rotation of the wave generator. The bearing conforms to the elliptical shape of the wave generator. The flex spline conforms to the shape of the wave generator though the compliant bearing so as it rotates, the flex spline will only engage with the inner teeth of the outer ring at the major axes of the ellipse. The circular spline has a different number of inner teeth to the number of outer teeth of the flex spline. Rotation of the wave generator thus causes a slower rotation of the output ring by its engagement with the flex spline. The output ring is connected e.g. via an output shaft to the device or surface to be moved by the actuator.

Typically, rigid support bearings are provided to stabilise or support the drive assembly relative to the housing. Such bearings are provided usually between the wave generator shaft and a fixed part of the assembly e.g. an earth spline and/or the assembly housing. Whilst such bearings can provide support to the rotating assembly, they can also limit compliance within the assembly due to their structural rigidity. The need for separate mounting and support for these bearings can severely compromise the unit's compact design. The bearings have to be selected and designed for high accuracy and durability making them costly and complex to maintain. Furthermore, these bearings often contribute to increased friction, wear and potential failure, which can undermine the system's reliability, performance and accuracy.

There is a need for an improved strain wave assembly design which addresses the above issues.

### SUMMARY

According to the disclosure, there is provided a strain wave drive assembly comprising: an assembly housing containing: a wave generator arranged to rotate about an axis and having an elliptical cross-section; a flex spline mounted around the wave generator; and an output spline arranged around the flex spline, the output spline driven by the wave generator via the flex spline, wherein the wave generator, the flex spline and the output spline are assembled to float relative to the assembly housing.

### BRIEF DESCRIPTION

Examples of the strain wave drive according to the disclosure will now be described with reference to the drawings. It should be noted that these are examples only and variations are possible within the scope of the claims.
Figure 1A shows a cross-section through a known type of strain wave drive.
Figure 1B is an exploded view of the main components of the strain wave drive of Fig. 1A.
Figure 2A shows a 3D view of a strain wave gearing having two output rings which rotate with the gearing and a fixed ground or earth ring.
Figure 3 shows a sectional view of a modified wave generator according to an example according to this disclosure.

### DETAILED DESCRIPTION

As mentioned above, conventional drives for moving e.g. flight control surfaces in aircraft, have used a series of inter-meshing gearwheels. In an attempt to reduce the overall size and weight of the gearing, thought has been given to the use of the more compact strain wave gears or drives (also known as harmonic drives). Such strain wave drives essentially consist of three main parts: a wave generator 1, driven by the motor drive shaft, is an elliptical shaft having bearings 2 arranged around the outer perimeter thereof. The wave generator may be attached to the motor drive shaft using a keyed connection 8. The wave generator is located within a cylindrical flex spline 3 which is a flexible annular component having radially outwardly extending teeth 4. The flex spline is sufficiently flexible to take up the elliptical shape of the wave generator as the wave generator and its bearings rotate within the flex spline. A rigid circular spline 5 is a ring that fits around the flex spline. The circular spline has inwardly extending teeth 7. The circular spline is typically fixed e.g. to the actuator housing. As the wave generator is rotated by the motor, it causes the flex spline to take up the elliptical shape such that the outwardly extending teeth of the flex spline mesh with the inwardly extending teeth of the circular spline at the locations of the major axis of the ellipse. The circular spline typically has more teeth than the flex spline such that as the teeth engage, the flex spline is caused to rotate relative to the circular spline at a rate of rotation defined by the gear ratio. In other applications, the circular spline may be an output ring gear positioned around the flex spline. The output ring gear is provided with inner teeth that engage with the teeth of the flex spline. As the flex spline deforms due to rotation of the wave generator inside it, its teeth engage with the inwardly protruding teeth of the output ring and, due to the elliptical movement of the point of engagement, this causes the output ring gear to rotate according to the gear ratio. The output ring gear is connected with a part or component to be moved by the drive e.g. via an output shaft.

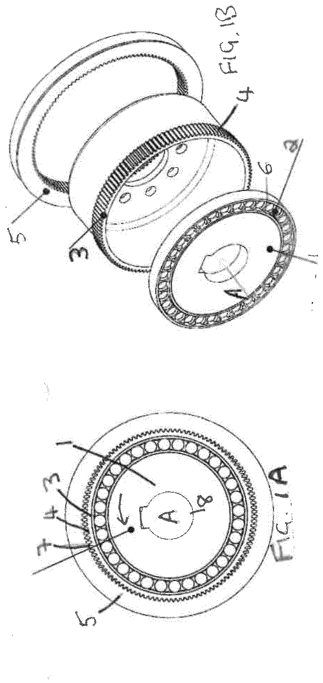

Figures 1A and 1B show, respectively, a section and an exploded view of the strain wave drive, showing the wave generator 1, rotatable about axis A. Ball bearings 2 are provided around the perimeter of the wave generator 1 in a thin race 6. The flex spline 3 is fitted around the wave generator to engage with the bearings to take up the elliptical shape of the wave generator. Teeth 4 on the outer surface of the flex spline 3 engage, at certain positions of rotation, with inwardly extending teeth 7 of the output ring gear 5. Earth gears may be fixed relative to the actuator housing or other fixed component and the flex spline may engage with an output shaft or output ring gear 5 which is caused to rotate with rotation of the point of engagement with the flex spline as the wave generator rotates. The output gear rotates according to the gear ratio and may be fixed to a part or surface to be rotated e.g. a flight control surface.

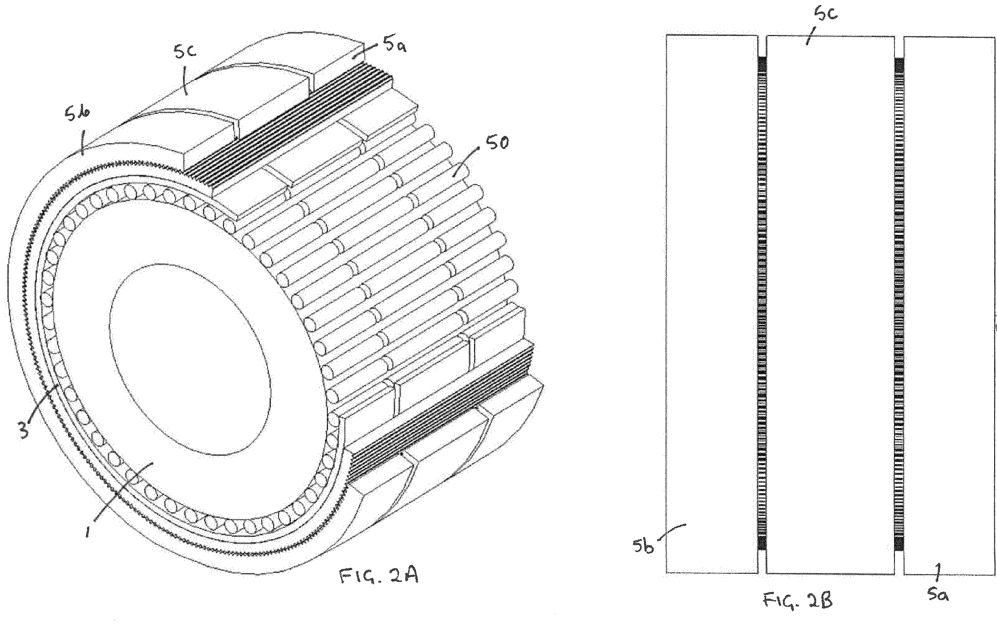

As shown in Figs. 2A and 2B a practical implementation of a strain wave gearing may have two output rings 5a, 5b that rotate with rotation of the input shaft, via the flex spline, as described above, and a fixed earth or ground ring 5c that is fixed e.g. relative to the gear assembly housing. In the example shown, the bearings 50 between the wave generator 1 and the flex spline 3 are in the form of rollers, but other bearing designs e.g. ball bearings are also possible as is known.

In use, the strain wave drive engages with an earth ring or spline 5c and, axially either side of the ground spline 5c, two outputs rings or splines 5a, 5b, via the bearings 50 and the flex spline 3. This provides a balanced arrangement.

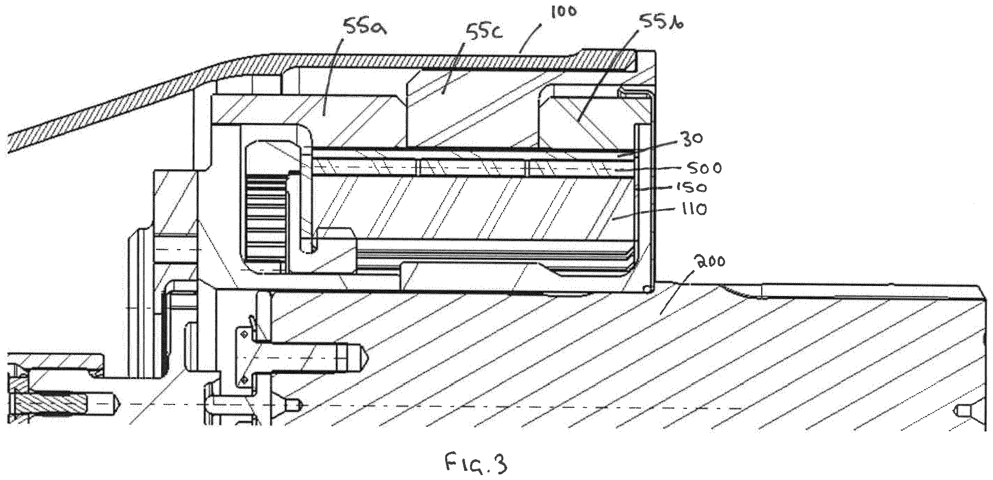

As mentioned above, typically rigid support bearings are provided to stabilise or support the assembly relative to the housing. Such bearings are provided usually between the wave generator shaft and a fixed part of the assembly e.g. an earth spline and/or the assembly housing. Such bearings, however, present challenges as described above. The strain wave drive presented herein is designed as a floating assembly without such support bearings. An example of such a bearingless, floating strain wave drive assembly is shown in Fig. 3.

It has been known, in recent times, to providing floating power stage pinion assemblies in mechanical transmissions, and the inventors have developed, based on such concepts, the idea of a completely floating strain wave drive assembly in which the assembly parts are self-aligning.

As with the known systems, the strain wave drive assembly comprises three main parts: the wave generator 110 which defines the elliptical outer profile, the flexible ring or flex spline 30 arranged around the wave generator and configured to flex to take the elliptical shape of the wave generator 110 via intermediate bearings 150, the flex spline having outer teeth (not shown in this simple view, but as described above for the conventional assemblies), and the rigid outer ring - here in the form of a single earth ring 55c axially between two output rings 55a, 55b, all located within a strain wave drive housing 100. An output shaft 200 is in engagement with and driven by the output rings 55a, 55b in a geared relationship to rotation of the wave generator shaft 110.

In contrast to the known assemblies, the strain wave drive assembly components and the output shaft are all floating - i.e. not supported by rigid bearings - relative to the housing 100. The stiffnesses of the output rings 55a, 55b are balanced to compensate for the unbalanced, unsupported output shaft that is 'plugged in' to the strain wave drive assembly for driving engagement with the output rings. The balanced configuration, which allows some degree of float in the strain wave assembly within the fixed earth ring, meaning that bearings and rigid bearing supports (which, in an unbalanced arrangement would be required to prevent skewing and unbalanced loading of the spline mesh) can be avoided.

Simple bearings 150 may be provided at the ends of the wave generator shaft and flex spline assembly.

Without rigid support bearings, the entire assembly is allowed to float, or self-align, in response to operational loads, misalignments and tolerance variations. Without rigid bearings, the wave generator is no longer fixed and it can shift slightly within the drive, allowing for compliance in response to internal and external forces. The wave generator can still deform the flexspline but with greater freedom to respond to variations in load or minor manufacturing tolerances. This compliance feeds through to the flexspline which can adapt its position slightly to maintain optimum meshing contact with the circular spline, even if load conditions or stiffnesses vary.

By avoiding the use of rigid support bearings, the assembly addresses the problems mentioned above relating to the use of such bearings and provides a floating, dynamically self-aligning assembly.

## Claims

1. A strain wave drive assembly comprising:
an assembly housing (100) containing:
a wave generator (110) arranged to rotate about an axis and having an elliptical cross-section;
a flex spline (30) mounted around the wave generator; and
an output spline (55a, 55b) arranged around the flex spline, the output spline driven by the wave generator via the flex spline,
wherein
the wave generator, the flex spline and the output spline are assembled to float relative to the assembly housing.

2. The assembly of claim 1, further comprising a drive shaft arranged to be rotated by a motor and connected to cause corresponding rotation of the wave generator.

3. The assembly of claim 1 or 2, further comprising bearings (50) arranged between the wave generator and the flex spline.

4. The assembly of claim 3, wherein the bearings comprise ball bearings in a race.

5. The assembly of claim 3, wherein the bearings comprise a plurality of roller bearings.

6. The assembly of any preceding claim, wherein the flex spline (30) has radially outwardly extending teeth (4) and the output spline has radially inwardly extending teeth (7) that engage with the outwardly extending teeth (4) as the flex spline rotates with the wave generator.

7. The assembly of any preceding claim, comprising two output splines (55a, 55b) arranged around the flex spline, the output spline driven by the wave generator via the flex spline.

8. The assembly of claim 7, further comprising an earth ring (55c) located axially between the two output splines and fixed relative to the housing (100).

9. The assembly of any of claims 1 to 6, comprising a single output spline and two earth rings, one either side of the output spline in the axial direction.

10. The assembly of any preceding claim, further comprising an output shaft (200) in engagement with and driven by rotation of the output spline (55a, 55b).

11. The assembly of any preceding claim, further comprising support bearings (150) at ends of the wave generator and the flex spline.
